# EUROPÄISCHE PATENTANMELDUNG

(11) **EP 1 327 815 A2**
(43) Veröffentlichungstag der Anmeldung: **16.07.2003**
(21) Anmeldenummer: 03000398.2
(22) Anmeldetag: 10.01.2003
(51) Int. Cl.: F16P 3/14

(54) **Sicherheitsvorrichtung für eine Gesenkbiegepresse**

(30) Priorität: 11.01.2002 DE 10200732
(71) Anmelder: Placke Werkzeug-Blechbearbeitungsmaschinen GmbH, 49326 Melle (DE)
(72) Erfinder: Finkemeyer, Dierk, 49324 Melle (DE)
(74) Vertreter: Busse & Busse Patentanwälte

(57) **Zusammenfassung**

Eine Sicherheitsvorrichtung für eine Presse (1), insbesondere Gesenkbiegepresse, weist zumindest eine mit einem Laser versehene Lichtschranke auf, die im Bewegungsbereich eines am Maschinengestell (3) verlagerbaren Werkzeugteiles (5) zum ortsfesten Gegenwerkzeug hin eine Sicherheitszone bildet. Mittels eines zwischen Sender und Empfänger verlaufenden Laserstrahls (7,8) ist ein die Maschinensteuerung beeinflussendes Schaltsignal erzeugbar. Erfindungsgemäß ist am Maschinengestell (3) eine in einer vertikalen Bewegungsebene des Werkzeugteils befindliche Sicherheitseinheit mit zwei Lichtschranken (7,8) vorgesehen ist, deren Laserstrahlsender bzw. -empfänger jeweils paarweise eine den beiden Lichtstrahlen (7,8) einen konstanten Höhenabstand vorgebende Baugruppe bilden.

## Beschreibung

Die Erfindung bezieht sich auf eine Sicherheitsvorrichtung für eine Presse, insbesondere Gesenkbiegepresse, gemäß dem Oberbegriff des Anspruchs 1.

Bei bekannten Sicherheitsvorrichtungen (EP 0 264 349) wird die Geschwindigkeit einen sich zum Arbeitsbereich nahe dem Gegenwerkzeug bewegenden Werkzeugteiles durch den Kontakt einer vorlaufenden Werkzeugkante mit einem Lichtstrahl erfaßt, der gleichzeitig mit zwei lichtempfindlichen Bauteilen eines Empfängers zusammenwirkt. Der Lichtstrahl verläuft dabei in Form eines beide lichtempfindliche Bauteile gleichzeitig erfassenden Strahlenbündels, mit dem eine punktgenaue Steuerung der Geschwindigkeit des Werkzeugteiles nur ungenau möglich ist.

Gemäß EP 0 789 182 wird eine Vorrichtung vorgeschlagen, die einen nach Art eines Lichtvorhanges ausgeführten Lichtstrahlerbausatz mit mehreren horizontalen Sender-Empfänger-Einheiten zur Positionsabfrage des Werkzeuges aufweist und gemäß DE 201 04 328 U1 ist eine Sicherheitseinrichtung gezeigt, die mit drei senkrecht zur Arbeitsbewegungsrichtung in einer horizontalen Ebene verlaufenden Lichtschranken versehen ist. Bei einem Vorschlage gemäß DE 197 17 299 A1 ist eine Sicherheitsvorrichtung vorgesehen, bei der der obere von zumindest zwei Lichtstrahlen als Justierlichtschranke zur Einstellung eines Sicherheitsabstands dient, der zur unteren Lichtschranke hin gebildet ist. Eine Verringerung der Vorschubgeschwindigkeit auf Arbeitsgeschwindigkeit erfolgt bereits bei Erreichen der oberen Lichtschranke, so daß ein langer Vorschubweg mit geringer Geschwindigkeit zu überfahren ist und damit die Produktivität des vorgesehenen Arbeitsganges nachteilig verringert ist.

Die Erfindung befaßt sich mit dem Problem, eine Sicherheitsvorrichtung für eine Presse zu schaffen, bei der mit geringem technischen Aufwand sowohl eine Laserbaugruppe als auch die Maschinensteuerung zur Überwachung des Systems nutzbar sind, dieses weitgehende Manipulationssicherheit aufweist und mit optimalen Vorschubgeschwindigkeiten sowie schneller Anpassung an unterschiedliche Höhen der Werkstücke eine Produktivitätssteigerung ermöglicht ist.

Die Erfindung löst diese Aufgabe durch eine Sicherheitsvorrichtung mit den kennzeichnenden Merkmalen des Anspruchs 1. Hinsichtlich wesentlicher weiterer Ausgestaltungen wird auf die Ansprüche 2 bis 13 verwiesen.

Mit der erfindungsgemäßen Ausbildung der nur zwei Lichtschranken mit konstantem Höhenabstand aufweisenden Baugruppen ist eine einfach in das Maschinensystem integrierbare Funktionseinheit geschaffen, die im Zusammenwirken mit der als permanente Kontrolle abfragbaren Maschinensteuerung eine manipulationssichere Einbaulage aufweist und bei zuverlässiger Gewährleistung der Sicherheit im Arbeitsraum der Maschine eine schnelle Anpassung der Presse an wechselnde Werkstückabmessungen ermöglicht.

Mit der kompakt aufgebauten Sicherheitsvorrichtung kann über dem Werkstück ein zur Geschwindigkeitsumschaltung optimal geringer Abstandspunkt vorgegeben werden, so daß die Vorschubgeschwindigkeit des sich bewegenden Werkzeuges erst im Nahbereich über dem Werkstück auf die vorgesehene Arbeitsgeschwindigkeit abgesenkt wird. Bei hinreichendem Fingerschutz über dem gesamten Vorschubweg des Werkzeugteils ist damit die Produktivität der Presse vorteilhaft erhöht und bei einem Wechsel der Werkstückgröße kann das System durch die einfache Einstellung der beiden Baugruppen im Bereich jeweiliger Stützvorrichtungen schnell an die veränderten Parameter angepaßt werden.

Weitere Einzelheiten und vorteilhafte Wirkungen der Erfindung ergeben sich aus der nachfolgenden Beschreibung und den Zeichnungen, in denen ein Ausführungsbeispiel des Gegenstands der Erfindung näher veranschaulicht ist. In der Zeichnung zeigen:
- Fig. 1: eine Prinzipdarstellung einer Gesenkbiegepresse mit einer im Bereich deren unteren Gegenwerkzeuges verlaufende Lichtschranken aufweisenden Sicherheitsvorrichtung,
- Fig.2: eine Prinzipdarstellung der Einbaulage der Sicherheitsvorrichtung mit nur zwei übereinander angeordneten Lichtschranken und deren Verbindung mit einer schematisch dargestellten Steuereinheit,
- Fig. 3: eine Seitenansicht der Presse gemäß Fig. 1 mit den Bauteilen der im Bereich des unteren Gegenwerkzeuges abgestützten Sicherheitsvorrichtung,
- Fig. 4: eine vergrößerte Ausschnittsdarstellung der Sicherheitsvorrichtung mit deren paarweise angeordnete Laserstrahler und - empfänger aufweisenden Baugruppen,
- Fig. 5: eine Prinzipdarstellung des Justierens der Laser-Baugruppe mit einem auf dem Gegenwerkzeug aufliegenden Maßkörper,
- Fig. 6: eine Seitenansicht der Justierung der Sicherheitsvorrichtung gemäß Fig. 5, und
- Fig. 7: eine Prinzipdarstellung ähnlich Fig. 5 mit einer Justierstellung der Bauteile bei einer veränderten Werkstückhöhe des zur Bearbeitung vorgesehenen Teils.

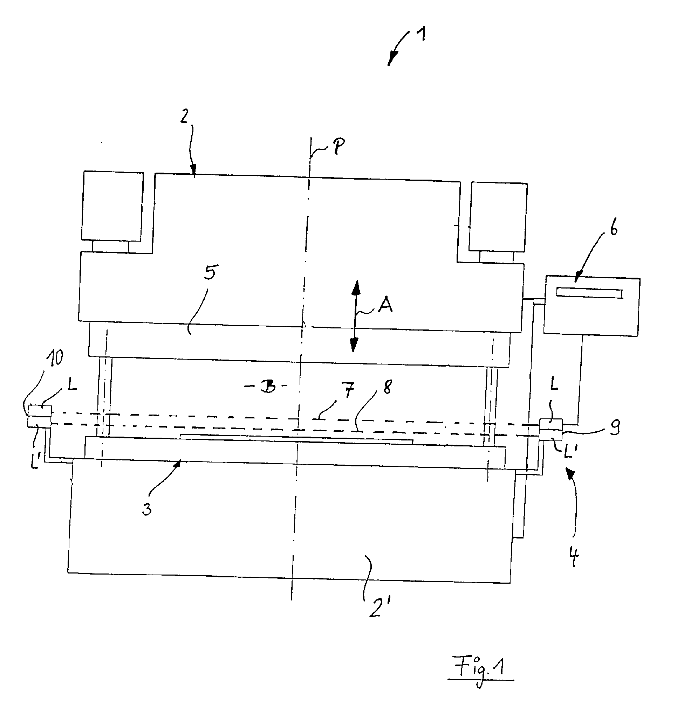

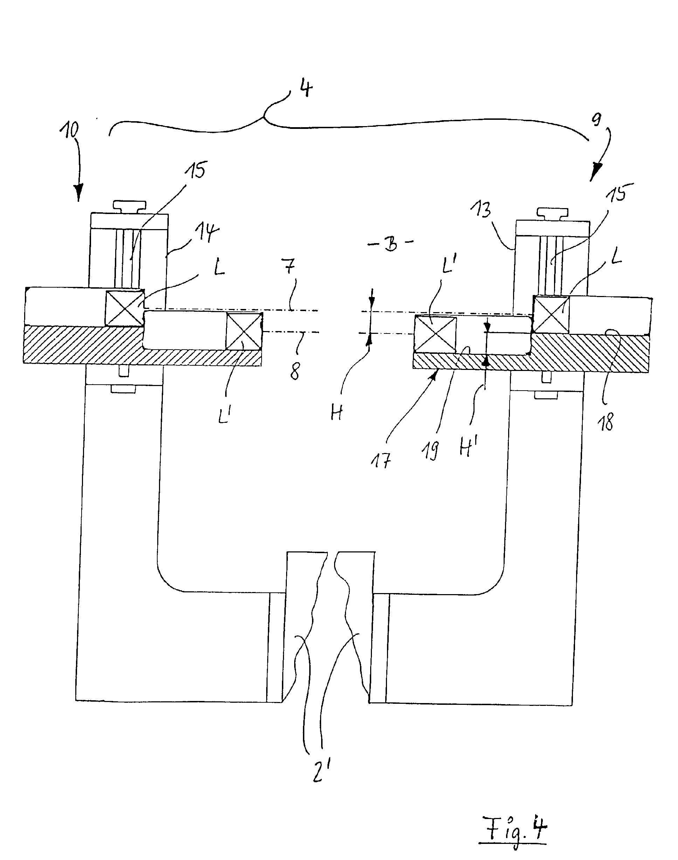

In Fig. 1 ist eine insgesamt mit 1 bezeichnete Presse, insbesondere in Form einer Gesenkbiegepresse dargestellt, an deren Maschinengestell 2 im Bereich des ortsfesten unteren Gegenwerkzeuges 3 eine insgesamt mit 4 bezeichnete Sicherheitsvorrichtung (Fig. 4) vorgesehen ist. Mittels dieser Sicherheitsvorrichtung wird der Bewegungsbereich eines am Maschinengestell 3 verlagerbaren oberen Werkzeugteiles 5 überwacht (Pfeil A). Bekannt ist dabei, in einer Sicherheitszone B jeweilige mit einem Laser versehene Lichtschranken anzuordnen, so daß bei einer ungewollten Unterbrechung der zwischen Sender und Empfänger verlaufenden Lichtstrahlen ein eine Maschinensteuerung 6 beeinflussendes Schaltsignal erzeugt werden kann, derart, daß durch einen während der Werkzeugbewegung auslösbaren Maschinenstopp Gefährdungen ausgeschlossen werden.

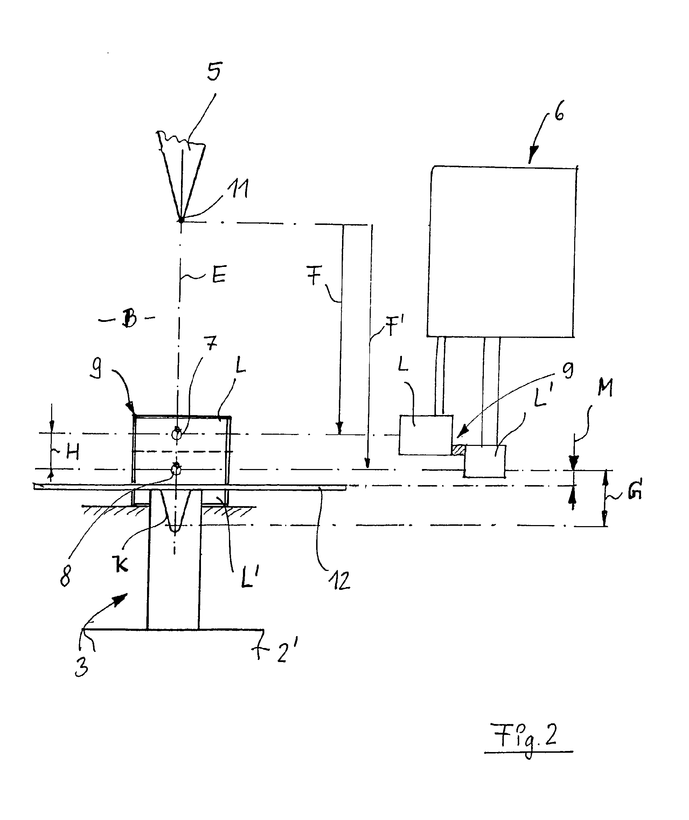

Die erfindungsgemäß ausgebildete Sicherheitsvorrichtung 4 ist als eine in einer vertikalen Bewegungsebene E (Fig. 2) des Werkzeugteiles 5 befindliche Sicherheitseinheit mit nur zwei Lichtschranken 7, 8 (Lichtstrahlen) ausgebildet. Die zugehörigen Laserstrahlsender bzw. Empfänger L, L' sind jeweils paarweise zu einer den beiden Lichtstrahlen 7, 8 einen konstanten Höhenabstand H vorgebenden Baugruppen 9, 10 verbunden und gegenüberliegend einer Mittellängsebene P der Presse 1 angeordnet. Diese Baugruppen 9 und 10 sind am Untergestell 2' (Unterwange) des Maschinengestells 2 in ihrer Sicherheitsposition für das sich bewegende Werkzeugteil 5 in Form einer Biegewange festgelegt, wobei diese Baugruppen 9 und 10 mit der an der Maschine vorgesehenen Steuerung 6 eine funktionale Einheit bilden, mit der die Bewegung des Werkzeugteiles 5 erfaßt und geregelt wird, derart, daß dessen weitere Bewegung nach Erreichen der oberen Lichtschranke 7 bis zur unteren Lichtschranke 8 hin im Eilgang ausführbar ist.

Mit dieser geringen Installationsaufwand erfordernden Konstruktion erfolgt eine vorteilhaft einfache Kombination der beiden Lichtschranken-Baugruppen mit einem System zur Maschinensteuerung. Jeweilige bei Bewegung des Werkzeugteiles 5 zum Gegenwerkzeug 3 hin durch eine Wegmessung erfaßte und von zumindest einer der beiden Lichtschranken 7, 8 vorliegende Daten ergeben gemeinsam eine Kontrollinformation, die sowohl als Freigabeinformation bei einem laufenden Arbeitshub dient als auch jederzeit die korrekte Einbaulage der Sicherheitseinheit bzw. deren Baugruppen 9 und 10 definiert. Denkbar ist dabei ebenfalls, daß beide mit der Steuerung verbundene Lichtschranken 7, 8 nacheinander bzw. gleichzeitig für diese Kontrollfunktion genutzt werden.

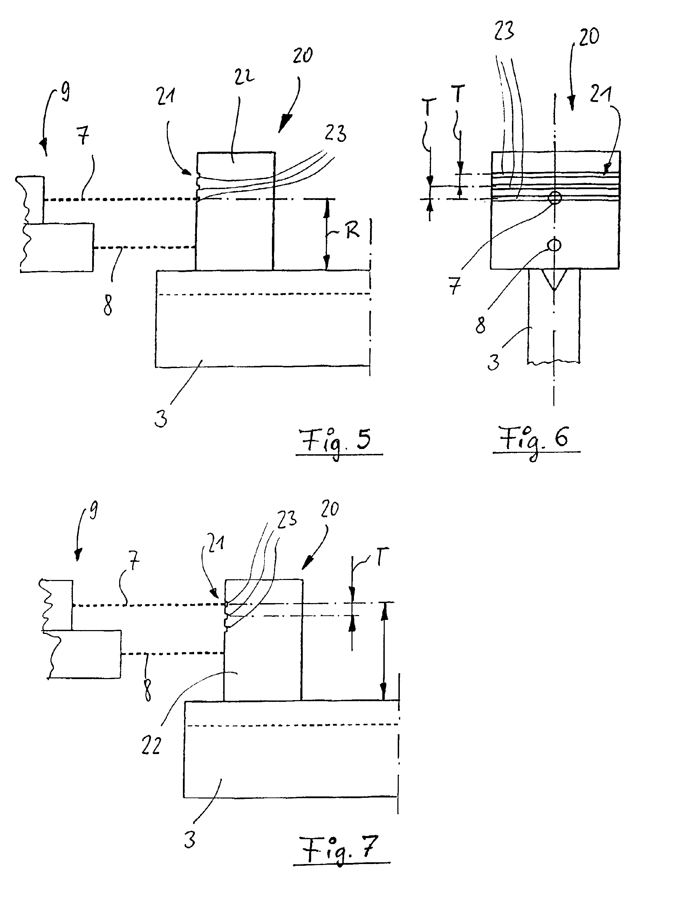

Die erfindungsgemäße Ausführung der Sicherheitsvorrichtung 4 kann mit den Baugruppen 9 und 10 diese zweifache Kontrollfunktion realisieren, da bereits die Unterbrechung des oberen der Lichtstrahlen 7 (bei Abwärtsbewegung des Werkzeugteiles 5 ) durch eine einfache Gegenabfrage der in der Maschinensteuerung 6 erfaßten Wegposition sowohl einen Test der Einstellung des Werkzeugteiles 5 als auch der Einbaulage der Sicherheitseinheit 4 insgesamt ergibt. Mit diesem Konzept kann die Presse 1 mit geringem Aufwand umgerüstet und die Sicherheitsvorrichtung 4 schnell an sich ändernde Bearbeitungsparameter angepaßt werden (Fig. 5 bis 7).

Das mit der maschinenintegrierten Wegmessung verlagerte Werkzeugteil 5 wird im Bereich der oberen der beiden Lichtschranken 7 durch die Kontrollmessung erfaßt. Danach kann das Werkzeugteil 5 ohne Änderung seiner Absenkgeschwindigkteit zum Bereich der unteren Lichtschranke 8 hin weiterbewegt werden und erst ab diesem Punkt des Vorschubweges wird eine Geschwindigkeitsänderung wirksam.

In Fig. 2 ist der vorbeschriebene Ablauf der Bewegungssteuerung mit der integrierten Sicherheitseinheit 4 dargestellt, wobei eine vorlaufende Kante 11 des Werkzeugteiles 5 ausgehend von der oberen Ruhestellung einen Vorschubweg F durchläuft und dabei in den Bereich der oberen Lichtschranke 7 gelangt. Da bei normalem Arbeitsablauf während dieses Vorschubweges F auch keine sicherheitsrelevante Beeinflussung der Lichtschranken 7 und 8 erfolgt, kann die obere Lichtschranke 7 nach Kontakt mit der Kante 11 wirkungslos geschaltet werden und das Werkzeugteil 5 führt mit gleichbleibender Vorschubgeschwindigkeit die weitere Absenkbewegung aus. Nach einem insgesamt mit F' gekennzeichneten Eil-Vorschubweg wird das Werkzeugteil 5 in den Bereich der bis dahin als sicherheitsrelevantes Teil wirksamen unteren Lichtschranke 8 verlagert. Dieses Erreichen der Position der unteren Lichtschranke 8 wird mittels der maschinenintegrierten Wegmessung erfaßt, so daß ab diesem Bereich oberhalb eines Werkstückes 12 (angegeben mit einem Abstand M in Fig. 2) eine Weiterbewegung des Werkzeugteiles 5 nur noch mit der für den Umformvorgang vorgesehenen Arbeitsgeschwindigkeit (Preßgang) erfolgt. Nahezu gleichzeitig mit diesem Umschaltvorgang wird die untere Lichtschranke 8 unwirksam geschaltet und bei Fortsetzung der Absenkbewegung durchläuft der Werkzeugteil 5 nunmehr den Arbeitsweg G, wobei ein Werkstück 12 in eine Umformkontur K des Gegenwerkzeuges 5 eingepreßt wird.

Die beiden Lichtschranken 7, 8 der Baugruppen 9 und 10 sind so in den Aufbau der Presse 1 integriert, daß bei einer unabhängig von der Bewegung des Werkzeugteiles 5 oder einer während dessen Bewegung ohne Rückmeldung der Maschinensteuerung 6 erfolgenden Unterbrechung eines der Laserstrahlen 7, 8 jederzeit ein die Sicherheit der Presse 1 gewährleistendes Stopsignal ausgelöst wird. Ebenso ist vorgesehen, daß durch die nach Art einer Selbstkontrolle ausgebildete Sicherung des Systems eine Manipulation an den Baugruppen 7, 8 mittels der Maschinensteuerung erkennbar ist. Damit kann eine die Sicherheitsvorrichtung 4 außer Kraft setzende Verstellung an den Maschinenbauteilen durch unbefugte Bedienpersonen nicht vorgenommen werden und auch manipulierende Veränderungen der Einbaulage der Baugruppen 9 und 10 sind bei dem erfindungsgemäßen System ausgeschlossen.

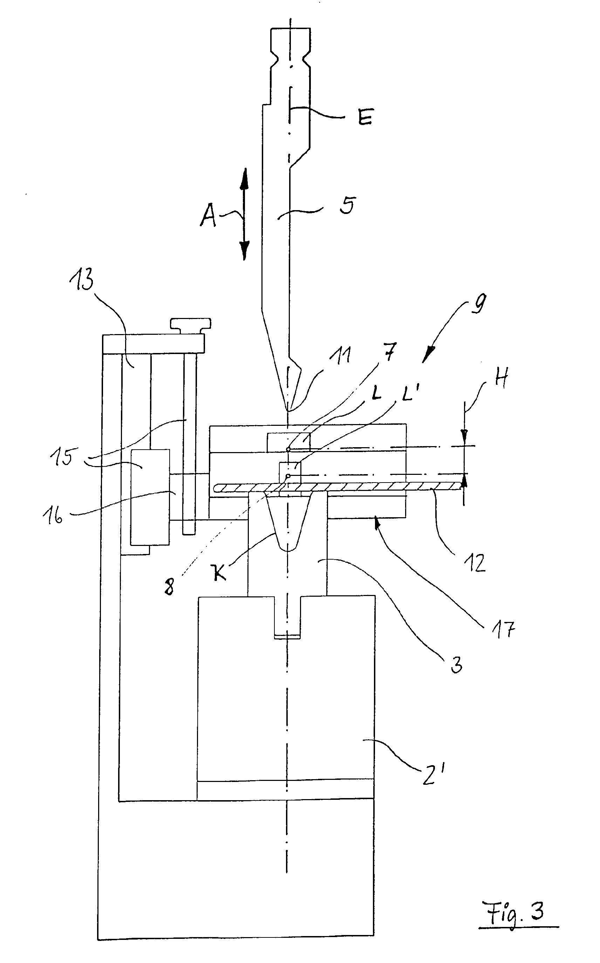

Die konstruktiven Einzeldarstellungen gemäß Fig. 3 und 4 verdeutlichen, daß die Sender bzw. Empfänger der Lichtstrahlen 7, 8 in der jeweiligen Baugruppe so fixiert sind, daß die beiden Lichtstrahlen einen Höhenabstand H von 8 bis 20 mm, vorzugsweise 14 mm, aufweisen, so daß insbesondere ein Hindurchfassen zwischen den beiden Lichtstahlen unmöglich wird. Für die Einstellung des unteren Abstandes M zwischen dem Werkstück 12 und der unteren Lichtschranke 8 wird die Bewegung der gesamten Baugruppe genutzt, wobei auch in diesem Bereich die untere Lichtschranke 8 als ein permanenter Fingerschutz wirksam bleibt. Deshalb ist vorgesehen, daß der Abstand M (Fig. 2) nur im Bereich von 1 mm bis 14 mm variabel ist. Als zweckmäßig für einen optimalen Arbeitsabstand hat sich dabei herausgestellt, daß der Abstand M mit einem Maß von 4 mm einzustellen ist und damit die Sicherheit in diesem Bereich auch dann gewährleistet wird, wenn der Umformvorgang bei minimalem Arbeitshub G erfolgt.

Die Darstellungen gemäß Fig. 3 und 4 zeigen außerdem, daß die beiden gegenüberliegenden Baugruppen 9 und 10 durch eine jeweilige Stützvorrichtung 13 bzw. 14 höhenverlagerbar am Maschinengestell 2' gehalten sind. Die Stützvorrichtungen 13, 14 nehmen dabei mit jeweiligen Stellmitteln 15 die gesamte Baugruppe 9 bzw. 10 auf.

Die Stützvorrichtung 13, 14 weist im Bereich ihrer Stellmittel 15 einen Tragarm 16 auf, an dessen freien Ende die mit einem Stufenblock 17 versehene jeweilige Baugruppe festgelegt ist. Der Stufenblock 17 bildet jeweilige Auflageflächen 18 und 19, auf denen die Sender- bzw. Empfängerbauteile L, L' abgestützt sind, so daß durch den Höhenabstand H' der beiden Ebenen 18 und 19 auch der Abstand H der Lichtstrahlen 7 und 8 zwangsläufig vorgegeben ist. Ebenso ist denkbar, daß an Stelle des Stufenblocks 17 einzeln verstellbare Bereiche vorgesehen sind (nicht dargestellt), so daß auch eine Variation des Abstandes H möglich ist.

Die Darstellungen gemäß Fig. 5 bis 7 zeigen in einer Prinzipdarstellung die maschinen- bzw. werkstückspezifische Einstellung der Baugruppen 9 und 10, von denen jeweils nur eine schematisch dargestellt ist. Zur Einstellung der Baugruppe 9 ist ein auf dem Gegenwerkzeug 3 auflegbarer Maßkörper 20 vorgesehen, der allgemein mit 21 bezeichnete Justiermarken aufweist. In der dargestellten Ausführung ist der Maßkörper 20 als ein quaderförmiges Metallteil 22 ausgebildet, in dem als die Justiermarken 21 mehrere Horizontalkerben 23 eingeformt sind.

Ausgehend davon, daß die minimale Höhe des zur Bearbeitung vorgesehenen Werkstückes 12 mit 1 mm Blechstärke angenommen wird, ist die untere Kerbe 23 in einer Höhe R = 19 mm in den Maßkörper 20 eingebracht. Für die Bearbeitung dieses 1 mm-Bleches wird die Baugruppe 9 dadurch justiert, daß die obere Lichtschranke 7 auf die untere Kerbe 23 eingestellt wird und damit zwangsläufig die untere Lichtschranke 8 die vorgesehene Position zum Werkstück 12 einnimmt. Der Abstand der übereinander verlaufenden Kerben 23 beträgt jeweils 1 mm (Maßpfeil T), so daß im Falle einer Einstellung des Systems auf ein 3mm-Blech (Fig. 7) die obere der Kerben 23 als Bezugslinie zur Justierung herangezogen wird. Diese Einstellung des Systems ist überaus einfach, so daß die notwendigen Maschinenumstellungen mit geringem Aufwand erreicht werden können.

## Patentansprüche

1. Sicherheitsvorrichtung für eine Presse, insbesondere Gesenkbiegepresse, mit zumindest einer im Bewegungsbereich eines am Maschinengestell (2, 2') verlagerbaren Werkzeugteiles (5) zum ortsfesten Gegenwerkzeug (3) hin eine Sicherheitszone (B) bildenden und mit einem Laser versehenen Lichtschranke (7, 8), mittels deren zwischen Sender und Empfänger (L, L') verlaufenden Laserstrahl ein die Maschinensteuerung (6) beeinflussendes Schaltsignal erzeugbar ist, **dadurch gekennzeichnet, daß** am Maschinengestell (2, 2') eine in einer vertikalen Bewegungsebene (E) des Werkzeugteils (5) befindliche Sicherheitseinheit mit zwei Lichtschranken (7, 8) vorgesehen ist, deren Laserstrahlsender bzw. -empfänger (L, L') jeweils paarweise eine den beiden Lichtstrahlen einen konstanten Höhenabstand (H) vorgebende Baugruppe (9, 10) bilden, die am Maschinengestell (2, 2') in einer Sicherheitsposition für das sich bewegende Werkzeugteil (5) festlegbar sind, derart, daß dieses auch nach Erreichen der oberen Lichtschranke (7) bis in den Bereich der unteren Lichtschranke (8) im Eilgang absenkbar ist und die Unterbrechung des oberen der Lichtstrahlen (7) durch eine Gegenabfrage der Maschinensteuerung (6) einen Test sowohl der Werkzeugeinstellung als auch der Einbaulage der Sicherheitseinheit bewirkt.

2. Sicherheitseinrichtung nach Anspruch 1, **dadurch gekennzeichnet, daß** die zur Werkzeugbewegung eine Wegmessung zwischen Werkzeugteil (5) und Gegenwerkzeug (3) aufweisende Maschinensteuerung (6) und das Schaltsignal zumindest einer der Lichtschranken (7, 8) mit einem gemeinsamen Kontrollpunkt die Einbaulage der Sicherheitseinheit definieren.

3. Sicherheitsvorrichtung nach Anspruch 1 oder 2, **dadurch gekennzeichnet, daß** die beiden Lichtschranken (7, 8) der Sicherheitseinheit in ihrer Position zum Werkzeugteil (5) bzw. Gegenwerkzeug (3) mittels der Maschinensteuerung (6) definierbar sind.

4. Sicherheitseinrichtung nach einem der Ansprüche 1 bis 3, **dadurch gekennzeichnet, daß** das mit der maschinenintegrierten Wegmessung verlagerbare Werkzeugteil (5) im Bereich der oberen der beiden Lichtschranken (7) durch eine Kontrollmessung erfaßbar, ohne Änderung seiner Absenkgeschwindigkeit zum Bereich der unteren Lichtschranke (8) weiterbewegbar und ab diesem Punkt des Vorschubweges (F') eine Geschwindigkeitsänderung auslösbar ist.

5. Sicherheitsvorrichtung nach einem der Ansprüche 1 bis 4, **dadurch gekennzeichnet, daß** dem Werkzeugteil (5) erst im Bereich der unteren Lichtschranke (8) mittels der Werkzeugsteuerung (6) ein eine Verringerung des Eilvorschubes auf eine niedrigere Arbeitsgeschwindigkeit bewirkendes Schaltsignal zugeordnet und gleichzeitig die untere Lichtschranke (8) unwirksam geschaltet ist.

6. Sicherheitsvorrichtung nach einem der Ansprüche 1 bis 5, **dadurch gekennzeichnet, daß** mit den beiden Lichtschranken (7, 8) bei einer unabhängig von der Bewegung des Werkzeugteils (5) oder einer während dessen Bewegung ohne Rückmeldung der Maschinensteuerung erfolgenden Unterbrechung eines der Laserstrahlen (7, 8) ein Stopsignal auslösbar ist.

7. Sicherheitsvorrichtung nach einem der Ansprüche 1 bis 6, **dadurch gekennzeichnet, daß** die Sender bzw. Empfänger (L, L') der Lichtschranken (7, 8) in der jeweiligen Baugruppe so fixiert sind, daß die beiden Laserlichtstrahlen einen Höhenabstand (H) von 8 mm bis 20 mm, vorzugsweise 14 mm, aufweisen.

8. Sicherheitsvorrichtung nach einem der Ansprüche 1 bis 7, **dadurch gekennzeichnet, daß** die beiden gegenüberliegend einer Mittellängsebene (P) angeordneten Baugruppen (9, 10) durch eine jeweilige Stützvorrichtung (13, 14) höhenverlagerbar am unteren Maschinengestell (2') gehalten sind.

9. Sicherheitsvorrichtung nach einem der Ansprüche 1 bis 8, **dadurch gekennzeichnet, daß** die Stützvorrichtung (13, 14) durch Stellmittel (15) die jeweilige Baugruppe (9, 10) aufnimmt, und deren Abstand zum Gegenwerkzeug (3) insbesondere mittels der die obere Lichtschranke (7) abfragenden Maschinensteuerung einstellbar ist.

10. Sicherheitsvorrichtung nach einem der Ansprüche 1 bis 8, **dadurch gekennzeichnet, daß** bei Einstellung der beiden Baugruppen (9, 10) die untere Lichtschranke in einem Bereich (M) von 1 mm bis 14 mm, vorzugsweise 4 mm, zum Gegenwerkzeug (3) hin einstellbar ist, und damit im Bereich der unteren Lichtschranke (8) ein Fingerschutz gebildet ist.

11. Sicherheitsvorrichtung nach einem der Ansprüche 1 bis 10, **dadurch gekennzeichnet, daß** die Stützvorrichtung (13, 14) einen mit dem Stellmittel (15) verbundenen Tragarm (16) aufweist, an dessen freien Ende die einen Stufenblock (17) mit den Sender- bzw. Empfängerbauteilen (L, L') abstützenden Baugruppen (9, 10) festgelegt sind.

12. Sicherheitsvorrichtung nach einem der Ansprüche 1 bis 11, **dadurch gekennzeichnet, daß** zur Einstellung der Baugruppen (9, 10) jeweilige auf dem Gegenwerkzeug (3) auflegbare und Justiermarken aufweisende Maßkörper (20) vorgesehen sind.

13. Sicherheitsvorrichtung nach Anspruch 12, **dadurch gekennzeichnet, daß** als Maßkörper (10) ein mit mehreren die Justiermarken (21) vorgebenden Horizontalkerben (33) versehender Metallquarder (22) vorgesehen ist.
